(19) **Europäisches Patentamt**

**European Patent Office**

**Office européen des brevets**

(11) **EP 0 567 869 B1**

(12) **EUROPÄISCHE PATENTSCHRIFT**

(45) Veröffentlichungstag und Bekanntmachung des Hinweises auf die Patenterteilung:
**09.07.1997 Patentblatt 1997/28**

(51) Int. Cl.$^6$: **C08B 11/02**, C08B 11/193, C08B 11/08

(21) Anmeldenummer: **93106226.9**

(22) Anmeldetag: **16.04.1993**

(54) **Verfahren zur Herstellung von Celluloseethern mit cyclischen Ethern als Suspensionsmittel**

Process for producing cellulose ethers involving the use of cyclic ethers as suspending agent

Procédé de préparation d'éthers de cellulose comprenant l'utilisation d'éthers cycliques en tant qu'agents de susprension

(84) Benannte Vertragsstaaten:
**BE DE FR NL SE**

(30) Priorität: **23.04.1992 DE 4213329**

(43) Veröffentlichungstag der Anmeldung:
**03.11.1993 Patentblatt 1993/44**

(73) Patentinhaber: **HOECHST AKTIENGESELLSCHAFT 65926 Frankfurt am Main (DE)**

(72) Erfinder: **Reichel, Diethart, Dr.
W-6100 Darmstadt (DE)**

(56) Entgegenhaltungen:
**US-A- 2 190 451          US-A- 3 278 521
US-A- 3 652 539**

* **DATABASE WPI Week 8932, Derwent Publications Ltd., London, GB; AN 89-230868 & JP-A-1165601**

**Beschreibung**

Die Herstellung von Celluloseethern mit einheitlichen oder unterschiedlichen Arten von Ethersubstituenten ist bekannt (siehe z. B. Ullmann's Encyklopädie der Technischen Chemie, Bd. 9, "Celluloseether", Verlag Chemie, Weinheim, 4. Aufl. 1975, S. 192 ff.). Die meisten der bekannten Verfahren zur Herstellung von Celluloseethern werden in zwei Stufen durchgeführt, wobei zunächst die Herstellung der "Alkalicellulose" und anschließend die Veretherung dieser "Alkalicellulose" erfolgt. Zur Herstellung der "Alkalicellulose" wird Cellulose in geeigneten technischen Aggregaten mit Wasser und Alkalihydroxiden möglichst gleichmäßig vermischt. Die Veretherungsstufe wird im allgemeinen so durchgeführt, daß die in der ersten Stufe erzeugte Alkalicellulose zusammen mit dem inzwischen zugesetzten Veretherungsmittel umgesetzt wird, wobei eine möglichst gleichmäßige Veretherung und hohe Substitutionsausbeuten angestrebt werden.

Aus US-A-4 460 766 ist ein Verfahren zur Herstellung von Celluloseethern mit Dimethoxyethan als Dispergiermittel bekannt.

Aus US-A-2 618 632 ist die Verwendung von Lösungsmitteln, wie Dioxan und Tetrahydrofuran, zur Herstellung von Carboxymethylhydroxyethylcelluloseethern bekannt.

Aus DE-OS-29 29 011 ist ein Verfahren zur kontinuierlichen Herstellung von Alkylcellulose unter Verwendung einer Rührkesselkaskade bekannt, bei dem zunächst durch Umsetzung von Cellulose mit wäßrig-alkoholischer Alkalilauge, gegebenenfalls in Gegenwart von Aromaten oder cyclischen Ethern, die Alkalicellulose hergestellt wird, und im Anschluß daran die Alkylierung erfolgt. Bei diesem Verfahren wird zur Erhöhung des Substitutionsgrades des herzustellenden Celluloseethers ein Teil des vorhandenen Wasser-Alkohol-Gemisches nach der Bildung der Alkalicellulose abdestilliert.

Aus DE-C-14 68 017 ist ein Verfahren zur Herstellung von Hydroxypropylcellulosen bekannt, bei dem die überschüssige Flüssigkeit, bestehend aus einem Gemisch aus Wasser und inertem organischen Verdünnungsmittel, wie Dioxan, Aceton oder Methylethylketon, zur Erzielung möglichst hoher Substitutionsgrade vor der Veretherung zum größten Teil entfernt werden muß.

Aus JP-OS-01/165 601 ist ein Verfahren zur Herstellung von Hydroxyethylcellulose bekannt, bei dem zunächst die Alkalicellulose durch Umsetzung des Zellstoffs mit einer wäßrig-alkalischen Lösung hergestellt wird, anschließend die Alkalicellulose in einem Gemisch aus Dioxan und Wasser dispergiert wird, und danach die Umsetzung mit Ethylenoxid erfolgt.

Aufgabe der vorliegenden Erfindung war es, die bekannten Verfahren zur Herstellung von Celluloseethern mit cyclischen Ethern als Suspensionsmittel zu verbessern, um zu Produkten mit hoher Veretherungsausbeute, gleichmäßiger Verteilung der Substituenten und Beständigkeit gegen oxidativen Abbau zu gelangen.

Gegenstand der Erfindung ist ein Verfahren zur Herstellung von Celluloseethern aus Cellulose und Alkylierungsmittel in einem Gemisch aus Wasser, Alkalimetallhydroxid und mindestens einem wassermischbaren cyclischen Ether aus der Gruppe 1,4-Dioxan und Tetrahydrofuran, umfassend die Maßnahmen

a) Alkalisierung,
b) nachfolgende Alkylierung und gegebenenfalls
c) Hydroxyalkylierung nach a) und vor c),

wobei der cyclische Ether in a) oder gegebenenfalls in c) zugesetzt wird und nach a), aber vor b) ein Teil des cyclischen Ethers und ein Teil des Wassers durch Destillation entfernt wird.

Die eingesetzte Cellulose ist entweder Baumwoll-Linters oder Holz-Zellstoff oder liegt in regenerierter Form als Cellulosehydrat vor. Die Teilchengröße sollte vor Beginn der Reaktion möglichst kleiner als 2,5 mm, insbesondere kleiner als 1 mm sein, wobei diese Teilchengröße z. B. durch Mahlung der längerfaserig angelieferten Cellulose zu "Pulvern" erreicht werden kann.

Die cyclischen Ether 1,4-Dioxan und/oder Tetrahydrofuran werden als Einzelstoffe oder als Gemische eingesetzt, wobei sich die Menge an eingesetztem Ether nach der Menge an eingesetzter Cellulose richtet und im Bereich zwischen 2 bis 30 Gewichtsteilen, bevorzugt 2 bis 18, besonders bevorzugt 2 bis 9 Gewichtsteilen Ether pro Gewichtsteil Cellulose liegt.

Die Basen werden bevorzugt als Alkalimetallhydroxid - besonders bevorzugt NaOH - in fester Form oder in geloster Form als Alkalimetallhydroxid-Lösung eingesetzt, wobei auch Ammonium-Basen eingesetzt werden können.

Sofern Alkalimetallhydroxide als Basen eingesetzt werden, beträgt der Anteil im allgemeinen 0,6 bis 8,0 mol, insbesondere 0,8 bis 6,0 mol pro mol Cellulose (berechnet als Anhydroglukose $C_6H_{10}O_5$). Der Wasseranteil im Reaktionsgemisch wird zweckmäßig so gewählt, daß er im Bereich von 3 bis 20 mol pro mol Cellulose liegt, oder, wenn als Bezugsgröße das Flüssigkeitsgemisch cyclischer Ether/Wasser dienen soll, so liegt der Anteil des Wassers im Gemisch bei 3 bis 40 Gew.%.

Als Mittel zur Hydroryalkylierung werden bevorzugt Alkylenoxide von $C_2$ bis $C_4$, wie Ethylenoxid und/oder Propylenoxid eingesetzt. Es können aber auch 1,2-Epoxybutan, Acrylnitril oder 2,3-Epoxypropyltrimethylammoniumchlorid eingesetzt werden.

Als Alkylierungsmittel werden bevorzugt Alkylchloride von $C_1$ bis $C_3$ und/oder Chlorcarbonsäuren von $C_2$ bis $C_4$ sowie deren Alkalisalze eingesetzt, insbesondere Chlormethan, Chlorethan und Monochloressigsäure. Es können aber auch andere geeignete Alkylierungsmittel, wie N-(2-Chlorethyl)diethylamin oder 3-Chlorpropionsäure, Chlorethansuffonsäure, Vinylsuffonsäure, Chlormethanphosphonsäure sowie deren Alkalisalze eingesetzt werden.

Bei der praktischen Durchführung des Verfahrens wird zweckmäßig zuerst die Cellulose in einem Gemisch aus 1,4-Dioxen und/oder Tetrahydrofuran, Wasser und Alkalimetallhydroxid alkalisiert, wonach die Zugabe des Mittels zur Hydroxyalkylierung in einer oder mehreren Stufen, in Abhängigkeit von der Art dieser Mittel erfolgt. Es ist auch eine Alkalisierung in Abwesenheit des wassermischbaren cyclischen Ethers möglich, wobei dessen Zugabe dann erst während der nachfolgenden Alkylierung oder während der Hydroxyalkylierung erfolgt. Die Reihenfolge, in welcher die verschiedenen Reagenzien bei der Alkalisierung umgesetzt werden, ist beliebig. Beispielsweise kann ein Teil oder das gesamte Wasser und/oder ein Teil oder das gesamte Alkali in den wassermischbaren cyclischen Ether (Suspensionsmittel) vor dem Mischen mit der Cellulose eingeführt werden. Es kann auch die Cellulose mit dem Suspensionsmittel gemischt werden, wonach Alkali und Wasser entweder getrennt oder als Gemisch zugegeben werden können. Es kann auch ein Teil oder das gesamte Wasser mit dem Suspensionsmittel vor dem Mischen mit der Cellulose gemischt werden, wonach dann Alkali und gegebenenfalls der restliche Wasseranteil zugegeben werden können, entweder gemischt oder getrennt in beliebiger Reihenfolge. Weiterhin kann das Wasser zur Cellulose vor dem Mischen mit dem Suspensionsmittel gegeben werden. Das Alkalimetallhydroxid kann in fester Form oder als wäßrige Lösung zugegeben werden. Wenn die Zugabe in fester Form erfolgt, ist ausreichend Zeit erforderlich, um das Alkalimetallhydroxid in der eingesetzten Wassermenge zu lösen.

Bevorzugt wird die Suspendierung der Cellulose im Suspensionsmittel und die nachfolgende Zugabe von wäßriger Alkalimetallhydroxid-Lösung.

Dauer und Temperaturbereich der Alkalisierung kann einen weiten Bereich umfassen. Bevorzugt wird zwischen 5 min und 3 h zwischen 0 °C und 100 °C alkalisiert.

An die Alkalisierung schließt sich gegebenenfalls die Hydroxyalkylierung der Alkalicellulose an und im Anschluß daran erfolgt eine Alkylierung.

Bei der gegebenenfalls erfolgenden Hydroxyalkylierung verläuft die Reaktion besonders erfolgreich bei Temperaturen zwischen 20 und 150 °C in einer Zeitspanne von 15 min bis 16 h. Bevorzugt sollte die Hydroxyalkylierung bei einer Temperatur von 60 bis 120 °C in einer Zeitspanne von 30 min bis 6 h durchgeführt werden. Das Alkylenoxid/Cellulose-Verhältnis liegt zwischen 0,2 und 10, besonders bevorzugt zwischen 0,5 und 5 Mol pro Mol Cellulose.

Im Anschluß an die Hydroxyalkylierung erfolgt eine Alkylierung. In dieser Verfahrensstufe werden die Alkylierungsmittel, je nach gewünschter Substitutionsart zugesetzt. Es hat sich gezeigt, daß die Alkylierung besonders gut bei Temperaturen zwischen 20 und 150°C über einen Zeitraum von 15 Minuten bis 16 Stunden erfolgt. Bevorzugt sollte die Alkylierung bei Temperaturen zwischen 60 bis 120°C über einen Zeitraum von 30 Minuten bis 60 Stunden durchgeführt werden. Die Menge der zugesetzten Alkylierungsmittel richtet sich nach dem gewünschten Substitutionsgrad des Celluloseethers und liegt üblicherweise im Bereich zwischen 0,05 und 20, bevorzugt zwischen 0,10 und 10 Mol pro Mol Cellulose.

Nach der Alkalisierung a) jedoch vor der Alkylierung b) wird ein Teil des in der Reaktionsmischung enthaltenen Wassers durch Abdestillieren entfernt. Dadurch wird auch ein beträchtlicher Teil des Suspensionsmittels entfernt. Die abzudestillierende Menge an Suspensionmittel/Wasser-Gemisch liegt im Bereich bis zu 70 Gew.-%, bevorzugt 20 bis 60 Gew.-% des eingesetzten Suspensionsmittel/Wasser-Gemisches.

Das erfindungsgemäße Verfahren kann diskontinuierlich oder kontinuierlich in einem der in der Celluloseether-Technologie bekannten Aggregate (z. B. Kneter, Rührkessel oder Wurfmischer) durchgeführt werden. Wenn die Temperatur der Reaktion so gewählt wird, daß sie über der Siedetemperatur des Suspensionsmittel/Wasser-Gemisches liegt, muß die Durchführung des erfindungsgemäßen Verfahrens in einer Druckapparatur erfolgen. Auch beim Einsatz von unter Normalbedingungen (1013 mbar, 20 °C) bereits gasförmigen Reaktionskomponenten wird üblicherweise eine Druckapparatur verwendet (z. B. bei Einsatz von Ethylenoxid oder Chlormethan als Veretherungsmittel).

Nach beendeter Alkylierung werden alle flüchtigen Bestandteile abdestilliert. Das so erhaltene Rohprodukt wird in einer geeigneten Trennvorrichtung (z. B. Zentrifuge oder Dekanter), gegebenenfalls nach Zugabe von Säure zur Neutralisation noch unverbrauchter Base, mit heißem Wasser beaufschlagt und kann so von noch anhaftenden Salzen befreit werden.

Anschließend wird getrocknet und es kann gegebenenfalls gemahlen, mit weiteren Komponenten vermischt oder auch granuliert werden. Diese Aufarbeitungs-, Reinigungs- und Nachbehandlungsmethoden sind die in der Celluloseether-Technologie üblichen und bedürfen deshalb keiner ausführlichen Beschreibung.

Die nach dem erfindungsgemäßen Verfahren hergestellten Celluloseether können auf bekannten Gebieten der Technik eingesetzt werden, so z.B. als Zusatzmittel auf dem Baustoffsektor, Polymerisationshilfsmittel, Zusatz für keramische Massen.

Die Vorteile des erfindungsgemäßen Verfahrens lassen sich wie folgt zusammenfassen:

- höhere Ausbeuten der eingesetzten Veretherungsmittel und damit höhere Wirtschaftlichkeit
- Herstellung von gleichmäßig veretherten Celluloseethern
- Herstellung von Celluloseethern mit einer erhöhten Stabilität gegenüber enzymatischem Abbau.

Allgemeines Herstellungsbeispiel für eine Methylhydroxypropylcellulose (MHPC)

Ein 50-l-Reaktionsmischer wird sukzessive mit 3,0 kg Cellulose, 900 g Wasser und 15,0 kg Suspensionsmittel beschickt. Unter Mischen und nach Inertisieren mit Stickstoff werden 1,45 kg 49,5 gew.-%iger Natronlauge zugegeben. Nach 20 min werden x g Propylenoxid zugegeben, die Temperatur von 20°C auf 90°C erhöht und nach weiteren 2 h Haltephase y kg 49,5 gew.-%ige Natronlauge zugegeben. Anschließend werden ca 9 l Suspensionsmittel/Wasser-Gemisch abdestilliert und danach bei einer Temperatur von ca. 60°C z kg Chlormethan zugegeben. Nach Aufheizen auf 100°C wird die Reaktionsmischung ca. 1 h bei dieser Temperatur gehalten. Danach werden alle flüchtigen Bestandteile abdestilliert. Das Rohprodukt wird mit heißem Wasser beaufschlagt, gegebenenfalls mit Salzsäure neutralisiert, abgesaugt und getrocknet.

| Suspensionsmittel: 1,4-Dioxan oder Dimethoxyethan (DMG) | | | |
|---|---|---|---|
| Beispiel | x (g) | y (kg) | z (kg) |
| A | 313 | 2,69 | 2,59 |
| B | 261 | 2,03 | 2,18 |
| C | 417 | 4,36 | 3,63 |

Bestimmung der Substitution und der Gleichmäßigkeit der Veretherung

Die Alkylsubstitution wird in der Celluloseether-Chemie allgemein durch den "DS" beschrieben.
Der "DS" ist die mittlere Anzahl an substituierten OH-Gruppen pro Anhydroglucoseeinheit.
Üblicherweise wird die Hydroxyalkylsubstitution durch den "MS" beschrieben. Der "MS" ist die mittlere Anzahl von Molen des Veretherungsreagenz, die pro Mol Anhydroglucoseeinheit etherartig gebunden sind.
Die Bestimmung der Seitengruppen erfolgt anhand der Zeisel-Methode (Lit.: G. Bartelmus und R. Ketterer, Z. Anal. Chem. 286 (1977) 161 - 190).
Cellulose unterliegt dem enzymatischen Abbau durch sogenannte Cellulase. Durch Substitution wird das Cellulose-Derivat stabiler gegen enzymatischen Angriff, wobei die Stabilität mit der Höhe des Substitutionsgrades steigt.
Da die Viskosität einer Celluloseetherlösung von dessen Molekulargewicht abhängt, läßt sich die Enzymstabilität durch Viskositätsmessung bestimmen.
Der Abbauquotient AQ ist definiert als das Verhältnis der Viskosität einer Celluloseether-Lösung nach und vor Cel-lulase-Behandlung:

$$AQ = \frac{\log \text{Viskosität nach Cellulase-Behandlung}}{\log \text{Viskosität vor Cellulase-Behandlung}}$$

Da die Enzymstabilität mit der Erhöhung des Substitutionsgrades ansteigt, ist der Quotient AQ/DS ein aussagekräftiger Parameter für die Vergleichbarkeit von Celluloseethern, sofern der Abbauquotient AQ nicht den Maximalwert von 1 erreicht, d.h. kein enzymatischer Abbau möglich ist.
Höhere AQ/DS-Werte deuten auf eine gleichmäßigere, niedrige AQ/DS-Werte auf eine ungleichmäßigere Veretherung sowie Alkalisierung hin.

Tabelle 1

| Suspensionsmittel | DS | MS | Ausbeute % | | AQ/DS |
|---|---|---|---|---|---|
| | | | Chlormethan | Propylenoxid | |
| Beispiel A: | | | | | |
| 1,4-Dioxan | 1,61 | 0,17 | 56,3 | 57,0 | 0,44 |
| DMG (*) | 1,56 | 0,15 | 54,8 | 50,9 | 0,36 |
| Beispiel B: | | | | | |
| 1,4-Dioxan | 1,50 | 0,14 | 62,7 | 56,7 | 0,45 |
| DMG (*) | 1,47 | 0,13 | 61,1 | 52,5 | 0,37 |
| Beispiel C: | | | | | |
| 1,4-Dioxan | 1,76 | 0,24 | 44,0 | 59,6 | 0,49 |
| DMG (*) | 1,76 | 0,22 | 43,9 | 55,0 | 0,40 |

(*): Vergleichsbeispiele

**Patentansprüche**

1. Verfahren zur Herstellung von Celluloseethern aus Cellulose und Alkylierungsmittel in einem Gemisch aus Wasser, Alkalimetallhydroxid und mindestens einem wassermischbaren cyclischen Ether aus der Gruppe 1,4-Dioxan und Tetrahydrofuran, umfassend die Maßnahmen

   a) Alkalisierung,
   b) nachfolgende Alkylierung und gegebenenfalls
   c) Hydroxyalkylierung nach a) und vor b),

   wobei der cyclische Ether in a) oder gegebenenfalls in c) zugesetzt wird und nach a), aber vor b) ein Teil des cyclischen Ethers und ein Teil des Wassers durch Destillation entfernt wird.

2. Verfahren nach Anspruch 1, dadurch gekennzeichnet, daß 2 bis 30, bevorzugt 2 bis 18, besonders bevorzugt 2 bis 9 Gewichtsteile wassermischbarer cyclischer Ether pro Gewichtsteil Cellulose eingesetzt werden.

3. Verfahren nach Anspruch 1, dadurch gekennzeichnet, daß bis zu 70 Gew.-%, bevorzugt 20 bis 60 Gew.-%, des eingesetzten Suspensionsmittel/Wasser-Gemisches entfernt wird.

**Claims**

1. A process for preparing cellulose ethers from cellulose and alkylating agents, in a mixture of water, alkali metal hydroxide and at least one water-miscible cyclic ether from the group comprising 1,4-dioxane and tetrahydrofuran, said process comprising the stages of

   a) alkalisation
   b) subsequent alkylation, and optionally
   c) hydroxy-alkylation after a) and before b)

   the cyclic ether being added in stage a) or, optionally, in stage c), and part of the cyclic ether and part of the water being removed by distillation after stage a), but before stage b).

2. The process as claimed in claim 1, characterized in that 2 to 30, preferably 2 to 18, and particularly preferably 2 to 9, parts by weight of water-miscible cyclic ether are used per one part by weight of cellulose.

3. The process as claimed in claim 1, characterized in that up to 70 % by weight, preferably 20 to 60 % by weight, of the suspending agent/water mixture are removed.

## Revendications

1. Procédé pour la préparation des éthers de cellulose à partir de la cellulose et des agents d'alkylation dans un mélange constitué d'eau, d'hydroxyde de métal alcalin et d'au moins un éther cyclique miscible à l'eau pris dans le groupe comportant le 1,4-dioxane et le tétrahydrofuranne, comprenant les mesures suivantes :

   a) alcalinisation,
   b) alkylation ultérieure et, éventuellement,
   c) hydroxyalkylation après a) et avant b),

   en ajoutant l'éther cyclique à l'étape a) ou éventuellement à l'étape c) et en éliminant par distillation après a), mais avant b), une partie de l'éther cyclique et une partie d'eau.

2. Procédé selon la revendication 1, caractérisé en ce que l'on utilise de 2 à 30, de préférence de 2 à 18, de manière particulièrement préférée de 2 à 9 parties en poids d'éthers cycliques miscibles à l'eau pour 1 partie en poids de cellulose.

3. Procédé selon la revendication 1, caractérisé en ce que l'on élimine jusqu'à 70 % en poids, de préférence de 20 à 60 % en poids du mélange d'agent de suspension/eau utilisé.